# EUROPEAN PATENT APPLICATION

(11) **EP 3 339 926 A1**
(43) Date of publication of application: **27.06.2018**
(21) Application number: 18152792.0
(22) Date of filing: 29.11.2011
(51) Int. Cl.: G02B 6/38

(54) **FIELD-INSTALLABLE FIBER OPTIC CONNECTORS AND RELATED CABLE ASSEMBLIES**

(30) Priority: 30.11.2010 US 418171 P
(62) Divisional of application: 11805275.2
(71) Applicant: Corning Optical Communications LLC, Hickory, NC 28601 (US)
(72) Inventor: Isenhour, Micah C., Lincolnton, North Carolina 28092 (US); Knecht, Dennis M., Hickory, North Carolina 28601 (US); Luther, James P., deceased (US)
(74) Representative: Sturm, Christoph

(57) **Abstract**

Field-installable mechanical splice connectors for making optical and/or electrical connections in the field are disclosed. One embodiment is a mechanical splice connector having an optical portion that includes at least one lens. The connector also includes a mechanical retention component for securing at least one optical field fiber to the at least one body.

## Description

### PRIORITY CLAIM

This application claims the benefit of priority under 35 U.S.C. § 119 of U.S. Provisional Application Serial No. 61/418,171 filed on November 30, 2010 the content of which is relied upon and incorporated herein by reference in its entirety.

### BACKGROUND

The disclosure is directed to field-installable optical fiber connectors and related fiber optic cable assemblies. More specifically, the disclosure is directed to field-installable fiber optic connectors suitable for use with consumer electronics and related fiber optic cable assemblies.

Optical fiber is increasingly being used for a variety of applications, including but not limited to broadband voice, video, and data transmission. As consumer devices are steadily using more bandwidth, connectors for these devices will likely move away from electrical connectors and toward using optical connections for increased bandwidth. Generally speaking, conventional fiber optic connectors used for telecommunication networks and the like are not suitable for consumer devices. For instance, conventional fiber optic connectors are relatively large compared with the consumer devices and their interfaces. Additionally, conventional fiber optic connectors are deployed with great care into relatively clean environments and/or cleaned by the craft before connecting the same. Further, even though fiber optic connectors are reconfigurable (i.e., suitable for mating/unmating) they are not intended for a relatively large number of mating cycles. Instead, conventional fiber optic connectors are high precision connectors designed for reducing insertion loss between mating connectors in the optical network.

On the other hand, the consumer electronic devices are expected to have a relatively large number of mating/unmating cycles during ordinary operation. The consumer electronic devices will be operated in a multitude of environments where dirt, dust, and other debris is encountered on a regular basis. Further, consumer electronic devices typically have size and space constraints for making connections. Consequently, there is an unresolved need for fiber optic connectors suitable for consumer devices.

### SUMMARY

The disclosure is directed to mechanical splice connectors for providing optical connectivity in the field. Some embodiments are hybrid mechanical splice connectors for making both an electrical and optical connections along with associated cable assemblies. Other variations of mechanical splice connectors only have optical connectivity and may use one or mores lenses and/or a diffractive cover for protecting the mating interface. More specifically, the disclosure is directed to mechanical splice connectors that are suitable for field installation by the craft for making a quick, easy, and reliable optical and/or electrical connection.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure, and are incorporated into and constitute a part of this specification. The drawings illustrate various embodiments and together with the description serve to explain the principles and operation.

### BRIEF DESCRIPTION OF THE FIGURES

**FIG. 1** is an exploded view of an explanatory hybrid mechanical splice fiber optic connector;
**FIG. 1a** is an exploded view of another explanatory hybrid mechanical splice fiber optic connector that is similar to **FIG. 1**, but includes lenses at the mating interface of the connector;
**FIG. 1b** is an exploded view of another explanatory hybrid mechanical splice fiber optic connector that is similar to **FIG. 1**, but includes a cover at the mating interface of the connector;
**FIG. 2** is an assembled perspective view of the hybrid mechanical splice fiber optic connector of **FIG. 1** shown with the electrical and optical wiring attached;
**FIGS. 3 and 4** respectively are front and rear perspective views of the hybrid mechanical splice fiber optic connector of **FIG. 2**;
**FIG. 5** depicts the hybrid mechanical splice fiber optic connector of **FIG. 2** disposed within a mounting box;
**FIG. 5a** depicts the hybrid mechanical splice fiber optic connector of **FIG. 1a** disposed within a mounting box;
**FIG. 6** depicts another explanatory hybrid mechanical splice fiber optic connector;
**FIG. 7** is the hybrid mechanical splice fiber optic connector of **FIG. 6** shown with a portion of the outer housing removed;
**FIGS. 8 and 9** depict a subassembly hybrid mechanical splice fiber optic connector of **FIG. 6** shown respectively with a shell and with the shell removed;
**FIG. 10** is an exploded view of the explanatory hybrid mechanical splice fiber optic connector of **FIG. 6** shown with an explanatory mechanical optical splice assembly;
**FIG. 11** is a detailed perspective exploded view of the explanatory mechanical optical splice assembly of **FIG. 10**;
**FIG. 12** shows an alternative mechanical splice assembly for use with hybrid connectors;
**FIG. 13** is a cross-sectional view of the explanatory the hybrid connector of **FIG. 6**;
**FIG. 14** is a perspective view showing a portion of the electrical connection for the hybrid connector;
**FIGS. 15-19** depict another explanatory hybrid fiber optic connector using one or more lenses;
**FIG. 20** is an exploded view of an another explanatory hybrid mechanical splice fiber optic connector that is similar to connector of **FIGS. 15-19**, but includes a discrete lens component at the mating interface of the connector;
**FIG. 21** is an enlarged cross-sectional view showing a portion of the construction for the connector of **FIG. 20**;
**FIG. 22** is an exploded view of an explanatory all optical mechanical splice fiber optic connector that includes lens elements;
**FIG. 23** is an assembled perspective view of the optical mechanical splice fiber optic connector of **FIG. 22** shown with the optical wiring attached;
**FIG. 24** depicts the mechanical splice fiber optic connector of **FIG. 23** disposed within a mounting box;
**FIGS. 25-27** depict the attachment of the field optical waveguides into the mechanical splice fiber optic connector of **FIG. 23**;
**FIG. 28** depicts a complementary plug for mating with the mechanical splice fiber optic connector of **FIG. 23**; and
**FIGS. 29** **and** **30** respectively depict an assembled perspective view and exploded view of another mechanical splice fiber optic connector that includes a diffractive cover.

### DETAILED DESCRIPTION OF THE PREFERRED EMBODIMENTS

Reference will now be made in detail to the preferred embodiments of the disclosure, examples of which are illustrated in the accompanying drawings. Whenever possible, like reference numbers will be used to refer to like components or parts.

Disclosed are mechanical splice connectors solely having optical connectivity as well as mechanical splice connectors have hybrid connectivity. As used herein, hybrid mechanical splice connectors and/or assemblies described herein are suitable for making optical and electrical connections for a variety of devices such as consumer electronics. Additionally, many embodiments are optionally shown as having hybrid connectivity the embodiments can be modified to solely have optical connectivity. Whether the disclosed mechanical splice connectors are solely optical or hybrid connectors they are advantageous since they allow optical connection by the user in the field for a simple, quick, and economical connection. Moreover, the hybrid connectors disclosed are robust for the relatively large number of mating cycles that consumer electronics experience. Reference will now be made in detail to the preferred embodiments, examples of which are illustrated in the accompanying drawings. Whenever possible, like reference numbers will be used to refer to like components or parts.

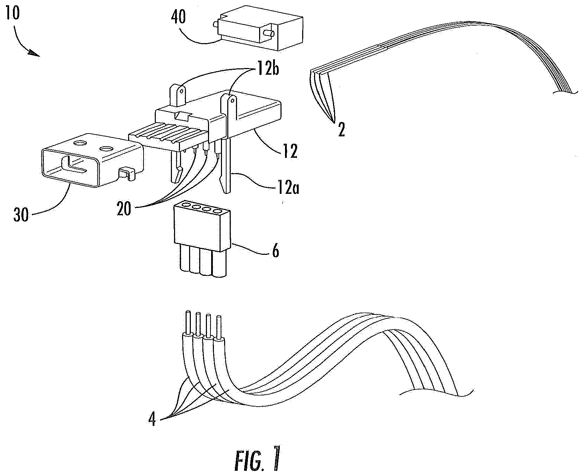

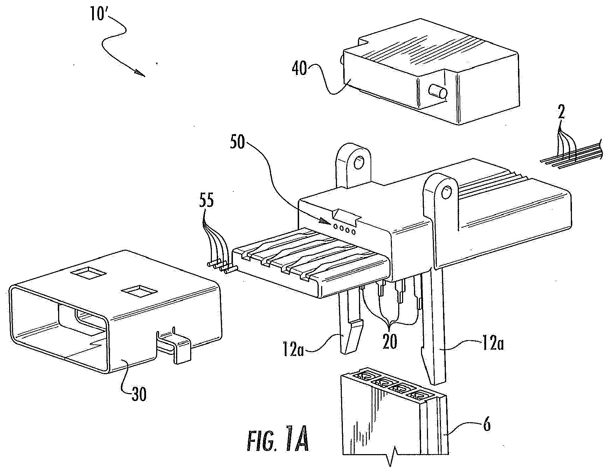

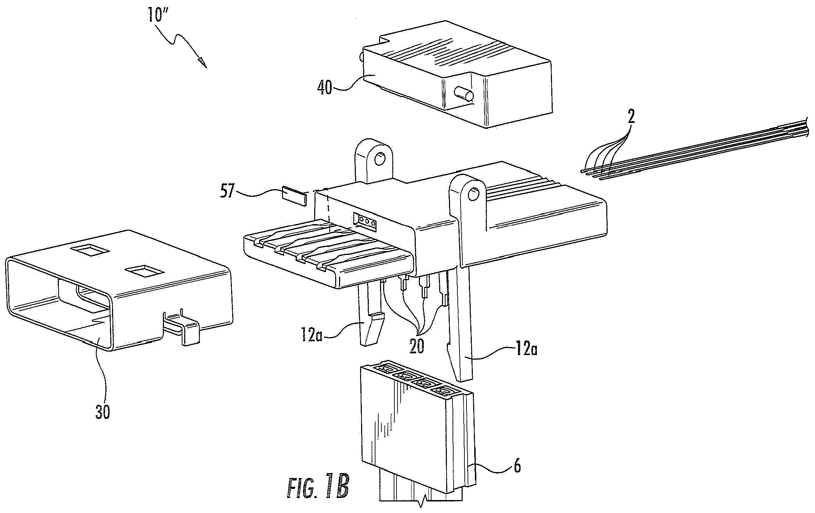

**FIGS. 1-4** depict a first explanatory hybrid connector **10** having an electrical portion and a mechanical retention component. As used herein, a hybrid connector means that the assembly includes structure for securing optical waveguides such as optical fibers and making electrical connections. Specifically, **FIG. 1** shows an exploded view of hybrid connector **10** along with suitable optical waveguides **2** and electrical conductors **4** such as an optical field fiber and a copper wire as may be terminated by the craft in the field. Hybrid connector **10** includes a body **12**, at least one electrical contact **20**, a shell **30**, and a mechanical retention component **40** for securing for at least one field optical waveguide **2** such as a field optical fiber near the mating interface (not numbered) of the connector. The mechanical retention component of hybrid connector **10** may secure optical waveguides **2** at a position near an end face or lens or alternatively use a mechanical fiber optic splice with a stub fiber (not visible) to connect optical fiber **2** as discussed below.

As shown, hybrid connector **10** is shown as an USB style connector package, but other hybrid connector packages are possible with the concepts disclosed herein. In other words, hybrid connector **10** has alignment mating geometry that uses shell **30** for gross alignment and body **12** has a stepped portion (i.e., L-shaped portion) at the front end which is aligned with a complementary connector for connectivity. Simply stated, the stepped portion of body **12** is used for making both optical and electrical connections when engaging a complementary interface. By way of example, the electrical contacts **20** are presented at the horizontal surface of the L-shaped portion of body **12** and the optical connection is presented at the vertical surface of the L-shaped portion of body **12**. However, the concepts disclosed herein can have other alignment mating geometry for securing the connection such as having a body with one or more keyway(s), an alignment opening, or a pin(s), or the like.

As will be discussed in greater detail later, other structures are possible for the mating interface of the hybrid mechanical splice connector. Illustratively, **FIG. 1a** is an exploded view of an explanatory hybrid mechanical splice fiber optic connector **10'** that is similar to **FIG. 1**, having one or more lenses at the mating interface of the connector. Likewise, **FIG. 1b** is an exploded view of another explanatory hybrid mechanical splice fiber optic connector **10'** that is similar to **FIG. 1**, having a cover at the mating interface of the connector

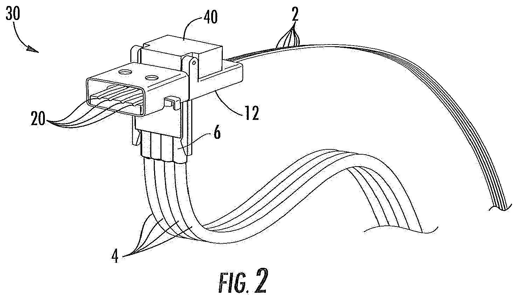

**FIG. 2** is an assembled perspective view showing the optical waveguides **2** and electrical conductors **4** attached to hybrid connector **10.** Electrical conductors **4** are attached to respective electrical contacts of an electrical plug **6**, but any other suitable electrical connector such as an insulation displacement contacts (IDC), crimp connection, or the like may be used with hybrid connectors. Electrical plug **6** is suitable for attaching to electrical contacts **20** of hybrid connector **10.** Electrical contacts **20** may be formed with the body **12** or be discrete components that attach to body **12** attached by any suitable means. Generally speaking, the electrical portion enters on a first plane and the optical plane enters on a second plane and terminate in small durable footprint. In this embodiment, electrical contacts **20** are formed for changing directions (i.e., a 90 degree turn) so that electrical plug **6** can engage from below and the optical fibers **2** are directed in-line from the back of hybrid connector **10.** However, any suitable angle is possible for the first and second planes of connectivity.

As shown, body **12** also includes optional attachment features **12a** for securing the electrical plug **6** in position. Specifically, attachment features **12a** are resilient arms with hooks on the end that snap about plug **6** for inhibiting unintended disconnection. At the mating interface, electrical contacts **20** are wiping contacts that are presented horizontally within shell **30**; however, other types of electrical contacts may be suitable such pin contacts or the like. Body **12** also includes pivot arms **12b** for pivotly securing mechanical retention component **40** to the same. Each pivot arm **12b** includes a hole (not numbered) for capturing respective pins on the mechanical retention component **40**; however, other pivot structures are possible such as using a separate pin.

Mechanical retention component **40** is used for securing at least one field optical waveguide **2** in the hybrid connector **10**. Specifically, mechanical retention component **40** clamps optical waveguides **2** to body **12** in precise alignment for making an optical connection with a complimentary connector. Body **12** can have suitable grooves and/or bores along the optical axis for receiving and aligning optical waveguides **2** in the body during insertion from the rear or other components from the front or rear. For instance, the rear portion of the entry may have lead-in portions that are larger and taper to a smaller size for positioning the optical fibers in the desired array spacing at a connector end face **12e.** Mechanical retention component **40** can have any suitable surface for clamping optical waveguides **2** to body **12**. For instance, mechanical retention component **40** can have a generally flat clamping surface or the clamping surface may have grooves for conforming/aligning portions of optical waveguides **2**. Further, the clamping surface may be either a rigid surface or a slightly compliant surface to inhibit optical waveguide movement when in the clamping position. Mechanical retention components may also include a lever or other structure for gripping and/or increasing the mechanical force for actuation. Moreover, the mechanical retention component **40** may only clamp a small portion such as a rearward portion of the inserted field fibers.

Mechanical retention component **40** may secure optical waveguides **2** at a position near an end face using any suitable structure as discussed. Further, mechanical retention component **40** may toggle between a clamp position that secures the field optical waveguides and an open position for inserting the field optical waveguides into hybrid connector **10**. The clamping position of mechanical retention component **40** secures the optical waveguides with enough force so they do not move without causing damage to the same. In this embodiment, mechanical retention component **40** is non-destructible and reversible so that in the event re-termination is necessary it can be completed by simply moving component **40** to the open position. The mechanical retention component **40** and/or body **12** may include geometry for toggling the same, which can have a positive lock, a friction-fit, or other suitable mechanical structure. In this embodiment, mechanical retention component **40** is a clamp that rotates for securing a field fiber that is inserted into hybrid connector **10** by the craft in the field that secured by a friction fit. However, a locking structure either reversible or not may be included on the mechanical retention component **40** and/or body **12** for maintaining the field fibers in the secured position. By way of non-limiting example, the mechanical retention component **40** may include a latching arm that engages an aperture or recess in body **12** for securing a clamping position.

Further, the mechanical retention component may secure (i.e., clamp or hold) a portion of at least one bare field optical fiber and/or a buffer portion of the at least one field optical fiber. Although, mechanical retention component **40** component rotates about an axis for securing the at least one field optical fiber other structures and/or mechanisms are possible. By way of example, the mechanical retention component may be a clamp, a wedge or ramp, a linear actuator having a push-button activation, a slide, a rotating cam, or the like. Additionally, the mechanical retention component can secure the field optical fiber at one or more locations along the length of the field optical fiber using the same or a second component or structure.

Likewise, hybrid connectors disclosed herein can have one of several different designs for transmitting a light signals across the connector interface. By way of example, mechanical retention component **40** may secure field optical waveguide **2** near the connector end face of the body **12.** Examples of securing the optical waveguides near the connector end face with a mechanical retention component **40** include positioning them generally flush with a mating end face of the connector as shown or having the optical waveguide adjacent to a lens near the mating end face of the body. Alternatively, the mechanical retention component may secure the field optical waveguide **2** in abutment with an end of a stub fiber or lens, thereby making a mechanical optical splice.

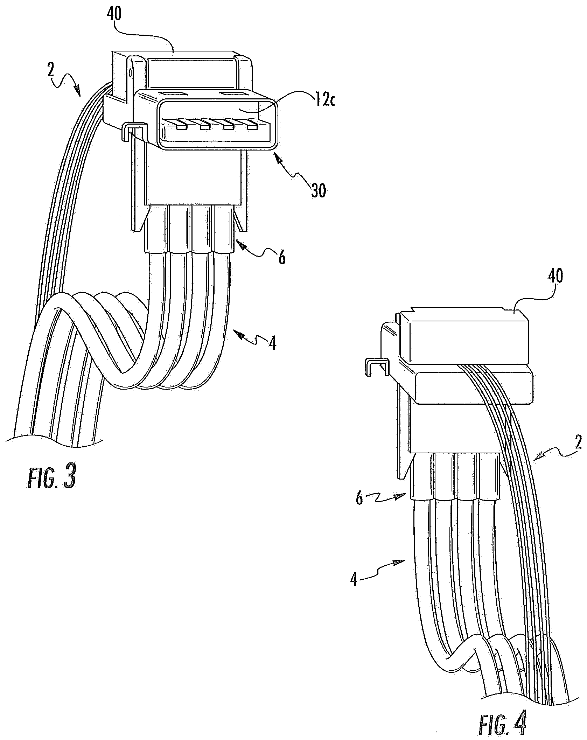

**FIGS. 3 and 4** respectively are front and rear perspective views of the hybrid connector **10.** Specifically, **FIG. 3** is a view into the shell **30** showing the optical connector end face **12e** and the electrical contacts **20.** Shell **30** is generally disposed about the front of body **12** and aids in gross alignment with a complimentary hybrid connector. Shell **30** is secured to body **12** in a suitable manner such as by snap-fitting and/or being crimped into the same.

**FIG. 1a** depicts hybrid mechanical splice connector **10'** similar to connector **10** that further includes at least one optically transmissive component near a mating interface **50** for guiding the optical signals therethrough. In the illustrated embodiment, the mating interface **50** includes four lens components **55** configured to expand or focus the optical signals received from the field optical waveguide **2** attached to the connector. In other words, the lens components **55** may enhance optical coupling with the mated complementary optical coupling. By way of example, the lens components may be graded refractive-index lenses; however, other suitable lenses are possible. The bores of body **12** can have a larger diameter for receiving the lens components **55** compared with the portion of the bore that receives the field optical waveguide. More or fewer lens components may be provided as the number of lens components may depend on the number of optical fibers (and therefore, optical channels) the connector can terminate. In other embodiments, the lens components **55** may be integrally formed with the body **12** as a single component that may or may not include an optically transmissive cover.

Other options designs include placing an optically transmissive cover in front of the lenses for protecting the same and providing surface that is easy to clean. **FIG. 1b** shows another explanatory hybrid mechanical splice fiber optic connector **10"** that is similar to connector **10'**, but includes an optically transmissive cover **57** at the mating interface of the connector. The optically transmissive cover **55** may include integral lens components for aiding in coupling the optical signals into and out of the field optical waveguides **2.** In other embodiments, the cover merely provides a flat cleanable surface and does not include lenses or the lenses could be individual components behind the cover **57** as desired. Still further variations are possible such as integrating the lens components **55** with the optically transmissive cover as one component.

Embodiments where the field optical waveguide **2** is in abutment with and end of a stub fiber, lens or mechanically spliced with another optically transmissive component for making an optical bridge may also use other techniques and/or structure for improving performance, validating the splice, or other functions. For instance, an index matching substance such as an index matching gel may be used for improving the optical coupling at the splice and reducing optical losses. The end of stub fiber or lens may also be shaped for aiding optical coupling.

Further, any one of the mechanical splice connectors disclosed may have one or more translucent components disposed about the mechanical splice inside the connector for observing the glow to determine if an excessive amount of light is leaking from the mechanical splice. By way of example, the mechanical splice connectors **10'** or **10"** may have one or more components with a translucent portion such as at least one of the body or the mechanical retention component having a translucent portion. Moreover, the shell or other components of the connectors disclosed may have one or more windows for observing whether an excessive amount of light is leaking from the mechanical splice by viewing the brightness of the translucent portion near the mechanical splice.

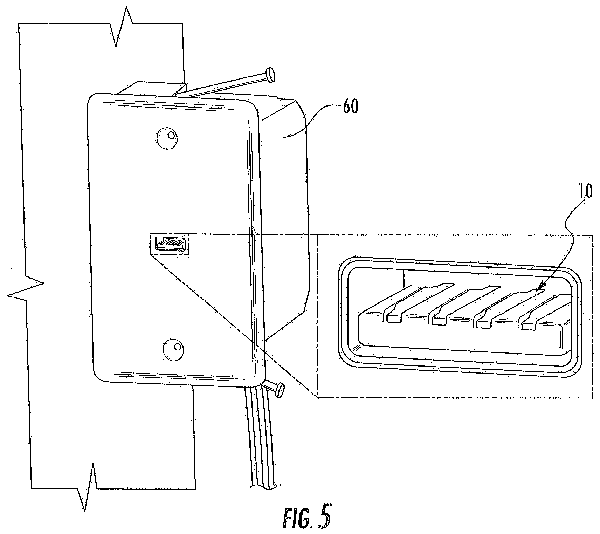

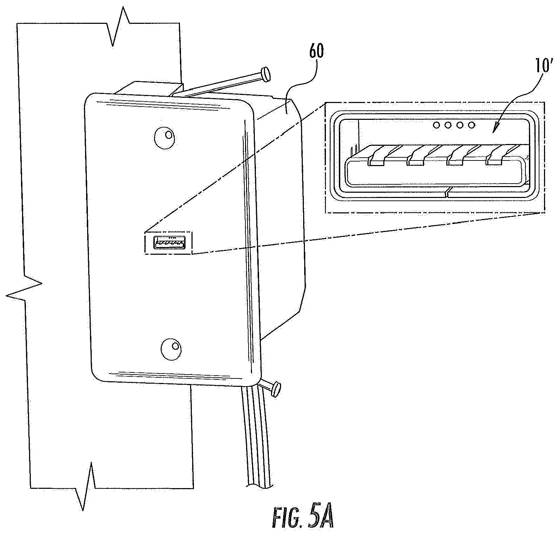

**FIG. 5** depicts the hybrid connector **10** mounted in a box **60** as a receptacle. In this configuration, hybrid connector **10** is mounted to a frame other structure that is attached to box **60.** In other configurations, hybrid connector can be modified to mount to a circuit board by snap-fitting, mechanical fasteners, solder pads, or the like. Hybrid connector **10** functions as one-half of the hybrid connection; however, the concepts disclosed herein may be suitable for either the half (e.g., the receptacle or the plug ends) of connection. Moreover, the hybrid connectors may connect any suitable number of electrical and/or optical waveguides. Likewise, **FIG. 5a** depicts the hybrid mechanical splice fiber optic connector **10'** disposed within box **60** in a similar fashion as hybrid connector **10.** Hybrid mechanical splice connector **10"** may be disposed in box **60** if desired.

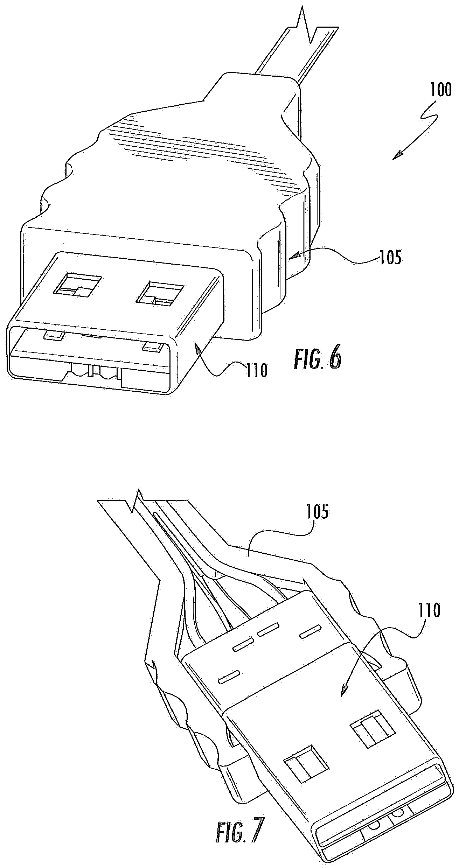

Illustratively, **FIGS. 6-11** depict another explanatory hybrid connector **100** configured as a plug for mating with the hybrid connector **10.** **FIGS. 6 and 7** respectively show a perspective view of hybrid connector **100** showing the mating end of the same and the connector with a portion of housing **105** removed to view routing of field optical waveguides **2** and electrical conductors **4** to a shell assembly **110.** Shell assembly **110** is removable from the housing and the optical waveguides, electrical connectors, strength members, and/or cable jacket can have any suitable strain relief. Hybrid connector **100** is suitable connector for mating with hybrid connector **10** for making both electrical and optical connections in a quick, easy and reliable manner. However, hybrid connector **100** uses a mechanical splice between the field optical fibers and one or more optical fibers stubs of the connector.

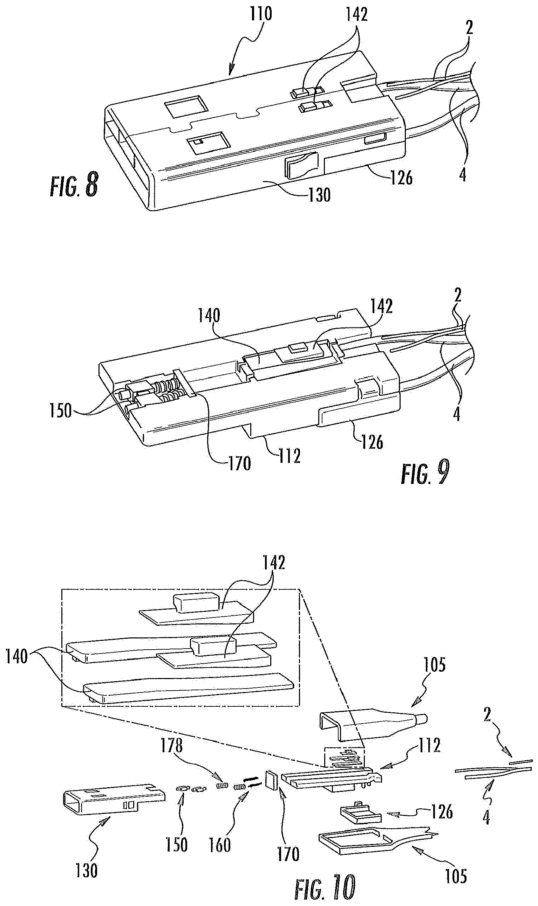

**FIG. 8** shows the shell assembly **110** of hybrid connector **100** removed from housing **105** and showing a pair of actuators **142** for activating mechanical retention components that secure field optical fibers **2**. As shown, shell **130** is formed about the internal components hybrid connector so that appropriate windows and openings align about respective structure as shown. By way of explanation, shell **130** is made of a conductive material such as stamped metal for providing strength and it may optionally provide an electrical ground reference. As shown, shell **130** is formed and at least partially secured using an interlocking seam (not numbered) along a longitudinal axis thereof. Moreover, shell **130** may have one or more windows or openings (not numbered) that align about structure of body **112** for alignment purposes and/or inhibiting relative movement between the same. As shown, actuators **142** extend through windows in shell **130** and the windows are large enough for allowing the actuators to move between an open position and a secure position. The windows for actuators **142** can also serve other functions such as acting as a viewing window for observing the glow of the splice loss of the mechanical splice if translucent components are used about the splice.

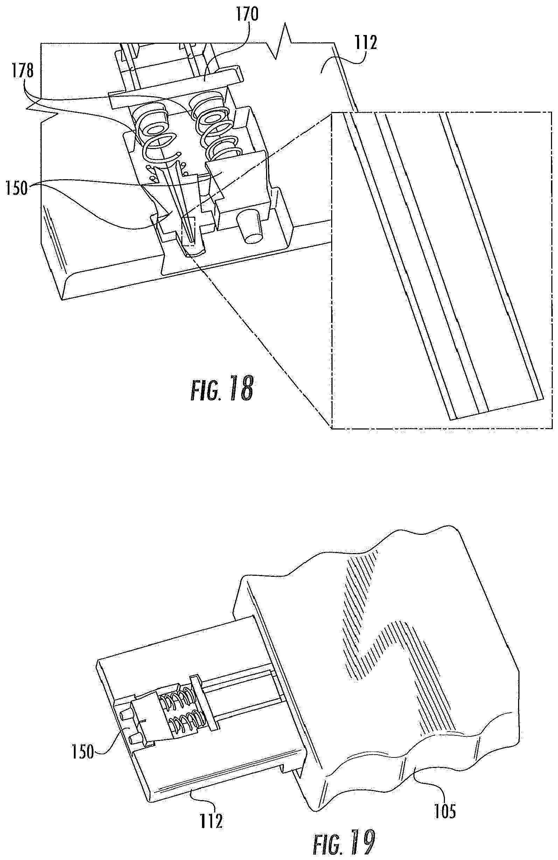

**FIG. 9** is a perspective view showing shell **130** removed, thereby showing the assembly details of lens elements and the mechanical fiber splice region. As shown, body **112** has several cavities for receiving and securing components of hybrid connector **100.** Starting at the mating end, the assembly shown in **FIG. 9** includes at least one lens **150** and in this embodiment individual lens or lens elements for each field optical fiber. As best shown in **FIG. 18**, the optical coupling between the field optical fiber and the lens is made within a bore (not numbered) of the lens **150.** In other words, the field fiber enters a rear portion of component **150** and abuts the lens portion of the same. As with other connector components disclosed, the lens may have a translucent portion for determining if excess light was leaking at the mechanical splice between the fiber and lens. As shown, the lenses **150** are biased to a forward position using individual coil springs **178** for each lens. Springs **178** are biased from a spring push **170** that is received in retention slots in formed in body **112.** Additionally, spring push **170** has openings for threading the optical fiber stubs **160** therethrough and into respective mechanical splice assemblies located rearward. Hybrid connector **100** is an explanatory connector showing concepts of the connector, but it may have many variations. For instance, similar hybrid connectors may use a single lens or having different types of mechanical splice assemblies and/or mechanical splice components as discussed herein.

**FIG. 10** is an exploded view of hybrid connector **100** showing the housing **105,** the body **112**, one or more electrical contacts **120**, an electrical connection **126**, shell **130**, a set of mechanical retention components **140**, two individual lenses **150**, optical fiber stubs **160**, spring push **170**, and one or more springs **178.** Hybrid connector **100** has a set of mechanical splice assemblies (not numbered) that are partially shown in the bubble detail that includes mechanical retention components **140**, actuators **142**, and one or more optical fiber stubs **160** for making individual mechanical splices with field optical waveguides **2**. In other words, first ends of the optical fiber stubs **160** are abutted with respective field optical waveguides **2** within the respective mechanical splice assembly. However, other embodiments may secure a plurality of field optical fibers using a single mechanical splice assembly instead of using individual mechanical splice assemblies for each field optical fiber. Lenses **150** are typically beam expanding lenses for focusing and/or increasing the area of illumination, thereby making alignment and signal transmission easier.

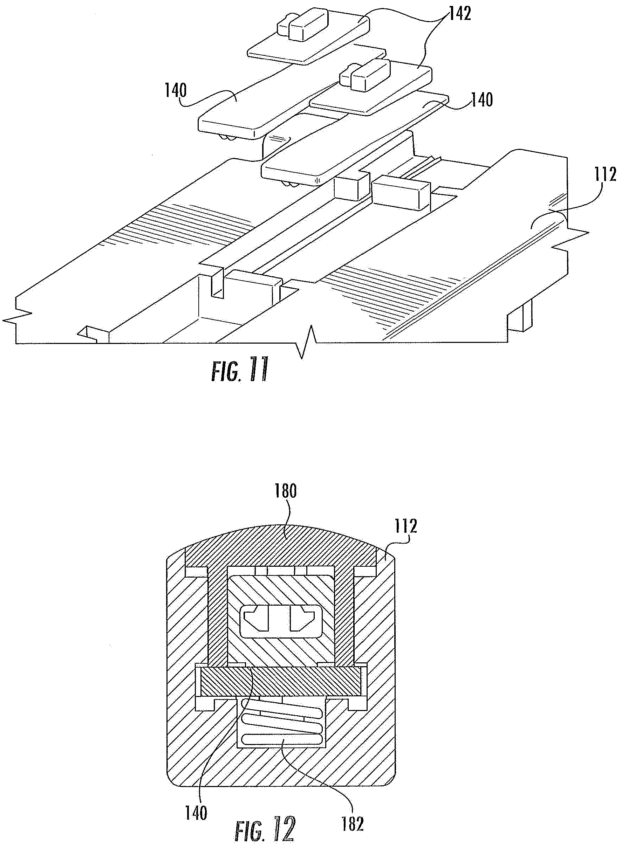

**FIG. 11** is a detailed perspective exploded view of the explanatory mechanical optical splice assembly of hybrid connector **100.** As shown, the body 112 and/or mechanical retention component **140** has a plurality of fiber alignment features and grooves (not numbered) for receiving and aligning the optical fiber stubs **160** with field optical fibers **2** within the splice area. Specifically, mechanical retention components **140** are ramps that move from an open position to a secure position using actuators **142** that move in a linear fashion that is generally in the longitudinal direction in-line with the optical fibers. In other words, when a respective actuator **142** is disposed in a rearward position with respect to the ramp feature of the mechanical retention component **140** the assembly is in an open position so that field optical fibers **2** may be inserted into the mechanical splice assembly for abutting alignment with the stub optical fiber **160.** Thereafter, moving the actuator **142** to a forward position with respect to the ramp feature of mechanical retention component **140** causes the component to move to a secure position, thereby clamping the field optical fiber **2** within the mechanical splice assembly. Additionally, hybrid connectors making a mechanical splice between optical fibers, lenses, or the like may optionally include an index-matching gel for reducing the splice loss.

Of course, other suitable structures and/or components are possible for making a mechanical splice between optical fiber stubs **160** and field optical fibers **2**. Illustratively, **FIG. 12** depicts a push button actuator for making the mechanical splice between both optical fiber stubs **160** and field optical fibers **2** simultaneously instead of individually. In this embodiment, the mechanical retention component **140** secures both stub optical fibers and field optical fibers in abutting alignment by clamping the same. In particular, the stub optical fiber and field optical fibers are disposed between a lower portion and an upper portion and the mechanical splice assembly is actuated using activator **180** such as a push button. Moreover, the lower portion may be biased into position and inhibit excess crushing forces using a spring **182.**

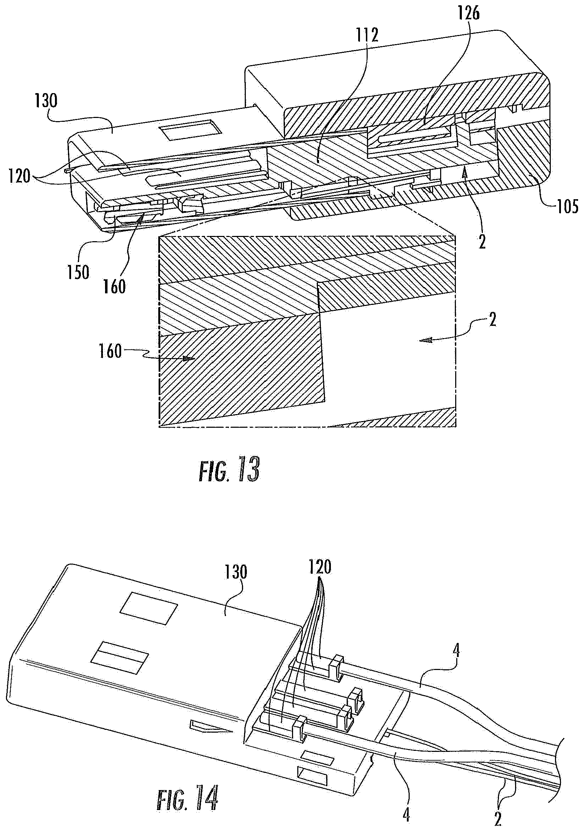

**FIG. 13** is a cross-sectional view of hybrid connector **100** showing the assembly details along with the mechanical splice between stub optical fiber **160** and field optical fiber **2**. Additionally, hybrid connector **100** uses electrical connection **126** for making and securing an electrical connection between respective electrical contacts **120** and electrical conductors **4.** Specifically, electrical connection **126** is an insulation displacement (IDC) connection that snap-fits to a closed position, thereby pushing electrical conductors **4** onto the insulation displacement structure of the electrical contacts **120** which cuts through the insulation of electrical conductors to make electrical contact. As best shown in **FIG. 8**, electrical connection **126** includes one or more tabs that engage windows of shell **130** for securing the same. Consequently, the electrical connections may be made in a quick and reliable manner by the craft. Other electrical connections are also possible. **FIG. 14** depicts the rearward portion of electrical contacts **120** and the electrical conductors **4** attached thereto. Additionally, hybrid connector **100** includes four electrical contacts **120** so it can be configured to be backwards compatible with USB 2.0 if so desired.

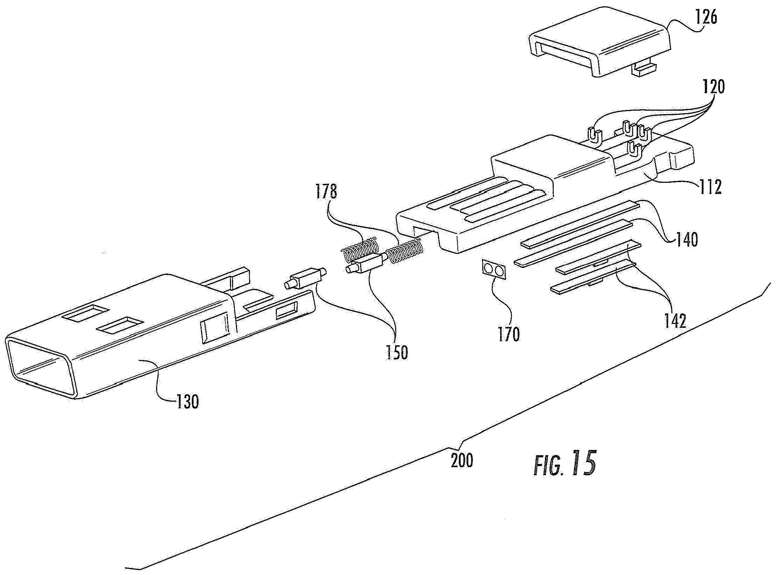

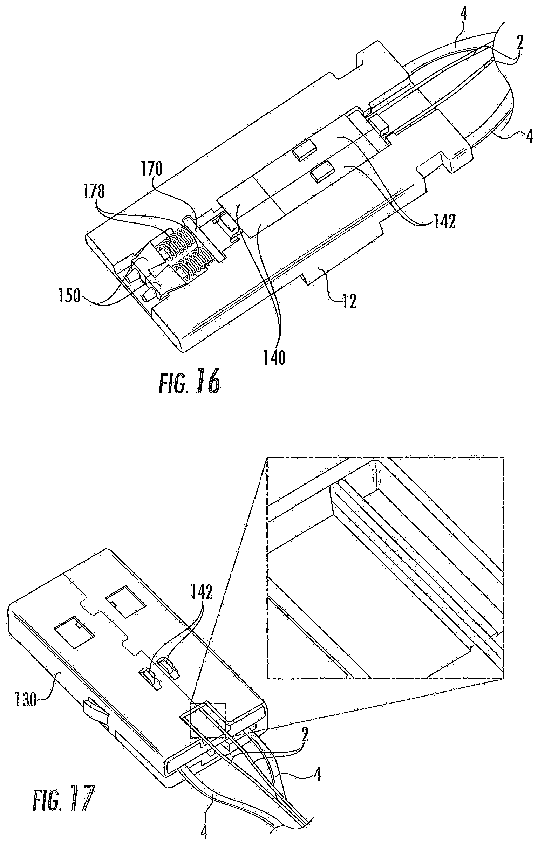

**FIGS. 15-19** depict another explanatory hybrid connector **200** for making electrical and optical connections that is similar to hybrid connector **100** except that it does not include stub optical fibers like hybrid connector **100.** Instead, hybrid connector **200** allows insertion of the field optical fibers **2** into the body **112** until they are abutting and/or adjacent to lenses **150** before securing the same. Mechanical retention components **140** and actuators **142** of hybrid connector **200** operate in a manner similar to hybrid connector **100**; however, the mechanical retention components **140** and actuators **142** are slightly longer than in hybrid connector **100** as best shown in **FIG. 16. FIG. 17** shows a perspective view with shell **130** attached to form the sub-assembly along with the lead-in detail shown in the detail bubble.

**FIG. 18** shows a detailed view of the lens arrangement and detail of hybrid connector **200.** Specifically, lenses **150** include a "blind" bore (not numbered) for aligning and centering the field optical fiber **2** at the rear portion of the lens **150.** As shown in the detail bubble, the bore of the lens can include one or more centering ribs or other structure for centering the field optical fiber therein and/or help maintain a predetermined longitudinal position with respect to the lens. Additionally, the lens **150** may have an index matching gel disposed therein and the centering ribs allow for the gel to be displaced as the field optical fiber is seated in the lens **150.** Still other variations are possible with hybrid connectors disclosed herein. For instance, **FIG. 19** depicts a hybrid connector having a single lens **150** for multiple field optical fibers. Moreover, lens **150** may also function as alignment mating geometry since the front end may use as a pin-like structure for aligning the lens front face with a complementary connector.

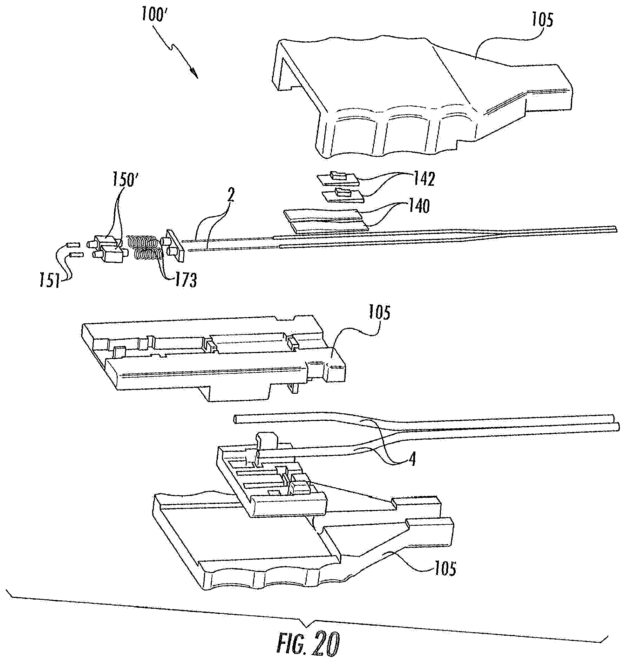

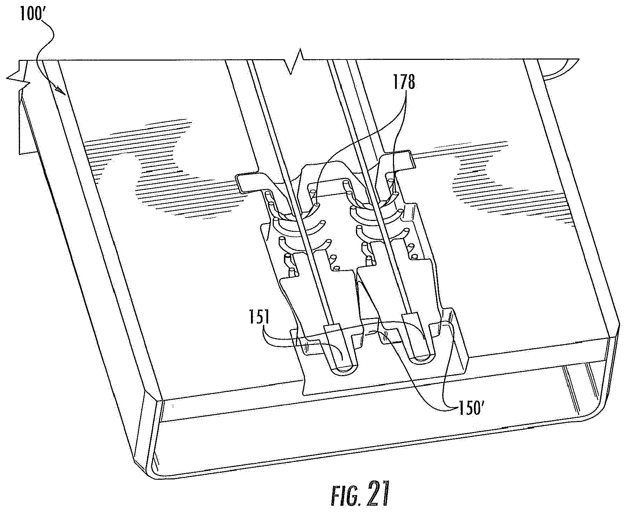

**FIG. 20** is an exploded view of an another explanatory hybrid mechanical splice fiber optic connector **100'** that is similar to connector **200** of **FIGS. 15-19**, but includes a discrete lens component **151** secured in body **150'**, thereby forming the mating interface of the connector. The discrete lens component **151** also acts as a body for making a mechanical splice between the field fiber and the lens. **FIG. 21** is an enlarged cross-sectional view showing a portion of the construction for connector **100'.** Lens component **151** may be any suitable lens such as a collimating lens like a GRIN element, refractive or diffractive lens. Unlike a conventional lens, the GRIN element may have a planar surface that is flat or angled as desired. The bore of component **150'** can include a stepped profile so as to seat the lens at the front of the component **150'.** As with other embodiments, one or more components of connector **100'** may have a translucent portion for observing whether excess light is leaking from the mechanical splice.

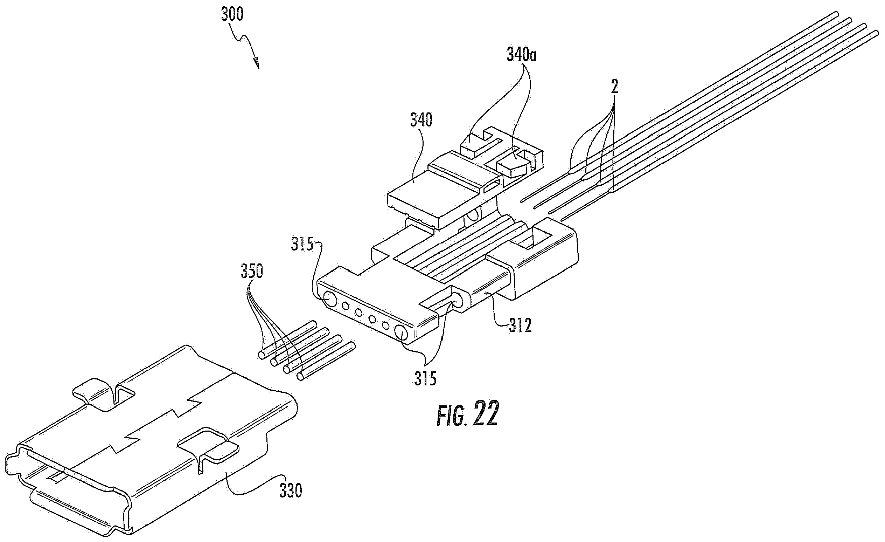

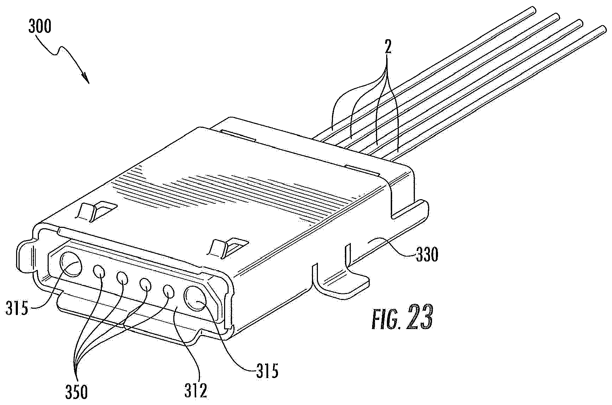

Still other variations are possible according to the concepts disclosed. **FIGS. 22** **and** **23** respectively depict an exploded view and assembled perspective view of an explanatory optical mechanical splice fiber optic connector **300** that only has optical connectivity. As shown, mechanical splice fiber optic connector includes a body **312** having a plurality of grooves **312a** or the like for receiving field optical waveguides **2** and acting as guides for insertion of the optical waveguides. Connector **300** also includes a shell **330** and a mechanical retention component **340.** Body **312** can receive field optical waveguides **2** at the mating interface of body **312** (i.e., front side) or have one or more lenses at the mating interface as desired. As depicted in **FIG. 22**, body **312** receives one or more discrete lens elements **350** in the respective bores of the body **312**, but the lens elements could be integrated (i.e., molded) into the body **312** providing a single part, thereby requiring fewer assembly steps. Additionally, this embodiment includes a mechanical retention component **340** that also acts as the actuator for securing the optical waveguides. The mechanical retention component **340** can be sized for receiving and retaining bare optical waveguides and/or buffered optical waveguides as desired.

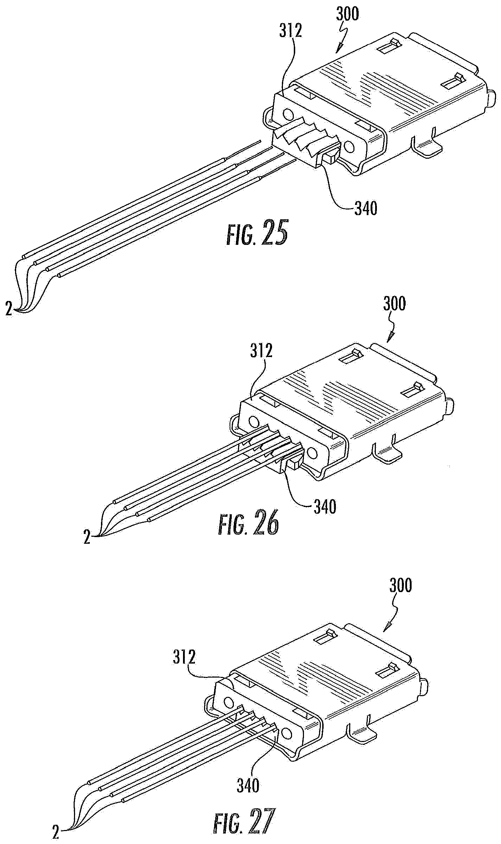

In other words, actuation of mechanical retention component **340** secures the optical waveguides within the connector **300** without having further structure (i.e., other components), but other embodiments may include a separate actuator or further structure if desired. Mechanical retention component **340** moves with respect to body **312** for securing the optical waveguides **2** to connector **300** and includes one or more locking features **340a** such as latching arms for securing the same with the body **312** as shown below in **FIGS. 25-27****.** The portion of mechanical retention component **340** that secures the field optical waveguides **2** can include one or more grooves or simply be a planar surface as desired. Additionally, any of the mechanical splice connectors disclosed herein can optionally include a suitable crimp for securing the field optical waveguides and inhibiting pull-out forces on the waveguides from moving the same with respect to the mechanical retention component.

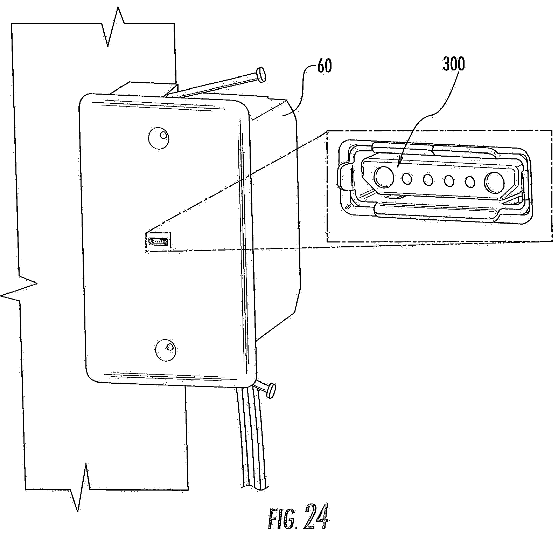

As with other embodiments, one or more components of connector **300** may optionally have a translucent portion for verifying the quality of the mechanical splice and/or one or more windows in the shell for viewing the translucent portion(s). **FIG. 23** is an assembled perspective view of the optical mechanical splice fiber optic connector **300** with the field optical waveguides attached and secured with in shell **330.** **FIG. 24** depicts the mechanical splice fiber optic connector **300** disposed within box **60.**

Connector **300** may also include alignment mating geometry such as guide pin bores **315** for receiving guide pins of a complimentary connector. As best shown in **FIG. 22****,** the guide pin bores **315** are interrupted between a front end and a back end of bore (i.e., a gap between the front and back of the bore). This interrupted bore **315** reduces friction between the guide pin of a complimentary connector and bore **315** and provides a cleaning/removal of debris by wiping when connected and disconnected. Additionally or alternatively, connector **300** and/or components thereof may have a shape that only permits mating with a complimentary connector. For instance, shell **330** can have a shape with chamfered corners at one or more locations for alignment and inhibiting damage from a non-mating connector if attempted by a user. Further, shell **330** can include one or more protrusions **330a** for creating a stop or lock for the fully mated position.

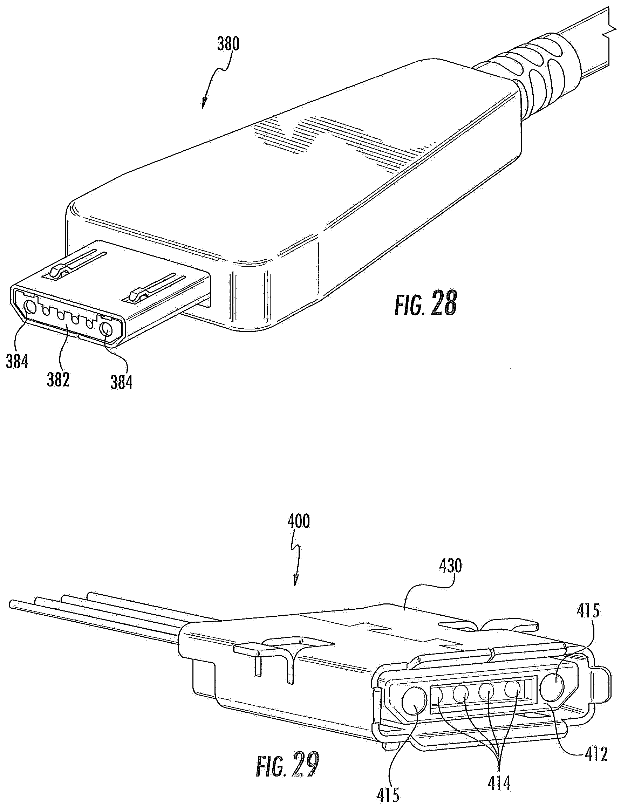

**FIGS. 25-27** depict the attachment of the field optical waveguides to mechanical splice fiber optic connector **300.** As shown in **FIGS. 25 and 26**, mechanical retention component **340** is in an unsecured position (i.e., rearward position) so that optical waveguides **2** may be inserted into the waveguide channels of body **312** to the proper location. Thereafter, mechanical retention component **340** is pushed to a secured position (i.e., forward position) until the locking feature(s) **340a** secure the mechanical retention component **340a** to body **312**, thereby securing the field optical waveguides **2** in connector **300.** **FIG. 28** depicts a complementary plug **380** for mating with the mechanical splice fiber optic connector **300.** Plug **380** may have a translating body **382** or ferrule that moves rearward on guide pins **384** when engaging connector **300.** In other words, the guide pins **384** are exposed as the body **382** translates rearward so the guide pins **384** align and enter guide pin bores on connector **300.** Connector **300** may also optionally include one or more electrical contacts if desired.

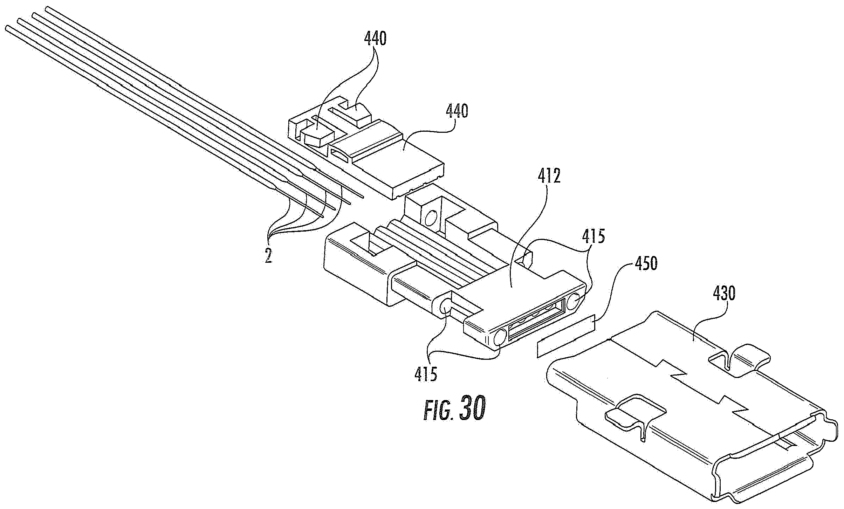

Other variations of connector **300** are possible according to the concepts disclosed. For instance, **FIGS. 29** **and** **30** respectively depict an exploded view and assembled perspective view of another explanatory optical mechanical splice fiber optic connector **400** that only has optical connectivity. As shown, mechanical splice fiber optic connector **400** includes a body 4**12** having a plurality of grooves **312a** or the like for receiving field optical waveguides **2**. Connector **400** also includes a shell **430** and a mechanical retention component **440.** Body **412** can receive field optical waveguides **2** at the mating interface of body **312** (i.e., front side) or have one or more lenses at the mating interface as desired. As depicted in **FIG. 30**, body **412** has one or more discrete covers **450** that protects and forms the mating interface of connector **400.** Like the connector **300** one or more lenses **414** may optionally be included in the respective bores of the body **412**, but the lens elements could be integrated (i.e., molded) into the body **412** providing a single part, thereby requiring fewer assembly steps. Cover **450** is optical transmissive to the optical signal and may be any suitable material. Cover **450** is preferably a diffractive cover and protects optical waveguides/lenses of the mating interface and provides a planar cleaning surface that is easily to clean by the end user. Additionally, like connector **300**, connector **400** includes a mechanical retention component **440** that also acts as the actuator for securing the optical waveguides. As best shown in **FIG. 29**, a plurality of lenses **414** are shown molded into body **412.**

Also disclosed are methods of making an optical and/or electrical connection, comprising the steps of: providing a mechanical splice connector having at least one body for receiving at least one field optical fiber, a mechanical retention component for securing at least one optical field fiber to the at least one body; and at least one lens attached to the at least one body; and inserting at least one field fiber into the at least one body and engaging the mechanical retention component to secure the at least one field fiber to the mechanical splice connector. The method may also optionally include providing a mechanical splice connector that further includes a diffractive cover.

Although the disclosure has been illustrated and described herein with reference to preferred embodiments and specific examples thereof, it will be readily apparent to those of ordinary skill in the art that other embodiments and examples can perform similar functions and/or achieve like results. All such equivalent embodiments and examples are within the spirit and scope of the disclosure and are intended to be covered by the appended claims. It will also be apparent to those skilled in the art that various modifications and variations can be made to the present invention without departing from the spirit and scope of the same. Thus, it is intended that the present invention cover the modifications and variations of this invention provided they come within the scope of the appended claims and their equivalents.

## Claims

1. A mechanical splice connector, comprising:
at least one body for receiving at least one field optical fiber;
a mechanical retention component for securing at least one optical field fiber to the at least one body; and
at least one lens attached to the at least one body.

2. The mechanical splice connector of claim 1, wherein the mechanical retention component slides for securing the at least one optical field fiber.

3. The mechanical splice connector of claims 1 or 2, wherein the mechanical retention component secures a buffer portion of the at least one field optical fiber.

4. The mechanical splice connector of claim 1-3, further including an optically transmissive cover that forms a portion of the body.

5. The mechanical splice connector of claims 1-4, the at least one mechanical retention component includes a component being selected from the group including a clamp, a wedge, a ramp, push-button, and a slide.

6. The mechanical splice connector of claims 1-5, the connector having a plurality of mechanical splice assemblies.

7. The mechanical splice connector of claims 1-6, the mechanical retention component having a buffer clamping structure for retaining the at least one optical field fiber.

8. The mechanical splice connector of claims 1-7, the body having alignment mating geometry.

9. The mechanical splice connector of claims 1-8, further including at least one electrical contact.

10. The mechanical splice connector of claims 1-9, wherein the connector is a portion of a wall-outlet.

11. The mechanical splice connector of claims 1-10, wherein the connector is mated with a complementary connector, thereby making an optical connection.

12. The mechanical splice connector of claims 1-11 being a portion of a cable assembly.

13. The mechanical splice connector of claims 1-12, the connector having a USB configuration.

14. The mechanical splice connector of claims 1-13, wherein at least one of the components of the connector has a translucent portion.

15. A method of making an optical connection, comprising the steps of:
providing a mechanical splice connector having at least one body for receiving at least one field optical fiber, a mechanical retention component for securing at least one optical field fiber to the at least one body; and at least one lens attached to the at least one body;and
inserting at least one field fiber into the at least one body and engaging the mechanical retention component to secure the at least one field fiber to the mechanical splice connector.

16. The method of claim 15, the mechanical splice connector further including a cover.
